# EUROPÄISCHE PATENTSCHRIFT

(11) **EP 0 448 187 B1**
(45) Veröffentlichungstag und Bekanntmachung des Hinweises auf die Patenterteilung: **02.03.1994**
(21) Anmeldenummer: 91250065.9
(22) Anmeldetag: 12.03.1991
(51) Int. Cl.: G09B 21/00

(54) **Gerät zur tastbaren Darstellung von Schriftzeichen und graphischer Information für Blinde**
Device for tactile representation of characters and graphic information for blind persons
Appareil pour la représentation tactile d'informations à base de caractères et graphiques pour aveugles

(30) Priorität: 13.03.1990 DE 4007945; 17.04.1990 DE 4012267
(43) Veröffentlichungstag der Anmeldung: 25.09.1991
(73) Patentinhaber: Fricke, Jörg, D-58644 Iserlohn (DE)
(72) Erfinder: Fricke, Jörg, D-58644 Iserlohn (DE)

(56) Entgegenhaltungen:
- EP-A- 0 337 363
- DE-A- 3 400 093
- GB-A- 2 088 077
- GB-A- 2 212 336
- IMB TECHNICAL DISCLOSURE BULLETIN Band 28, Nr. 5, Oktober 1985, Seiten 1996,1997; "Braille display system for the blind"
- fluid mechanics-soviet research, vol. 8, no. 4, july - august 1979, pp. 48-61. r.g. gorodkin et al: applications of the electrorheological effect in engeneering pracice, scripta publishing co., 1980.

## Beschreibung

Die Erfindung betrifft ein Gerät zur tastbaren Darstellung von zeichencodierter und bildhafter Information unter Verwendung von elektrisch gesteuerten Anzeigeelementen, die flächenhaft angeordnet sind und taktile Elemente senkrecht zur Anzeigefläche bewegen können. Die Anzeigefläche desselben Geräts dient auch als Eingabetablett, falls das Gerät an einem Rechner- oder Kommunikationssystem betrieben wird.

Die tastbare Darstellung von Schriftzeichen und Bildern soll sehbehinderten und blinden Personen das Erfassen von gedruckter Information, die nicht besonders für Blinde aufbereitet ist, unter Zuhilfenahme eines elektronischen Bildaufnahmegerätes ermöglichen und bei der Benutzung von Datenverarbeitungsanlagen und Kommunikationsmedien die sichtbare Bildschirmausgabe ersetzen. Eingabegeräte dienen der Auswahl, Positionierung, Erzeugung und Modifizierung von Datenobjekten.

Es sind Geräte bekannt, die als tastbare Anzeigeelemente elektromagnetisch oder elektrostriktiv betriebene Stifte besitzen (L. Kay: "Electronic aids for blind persons: an interdisciplinary subject", in: IEE Proceedings, Vol. 131, Pt. A, No. 7, Sep. 1984, S. 559 - 576). Ein elektromagnetisches Fühlzeichen für Blinde beschreibt DE-AS 10 94 808. Zur Darstellung von Blindenschrift werden an Rechensystemen Anzeigegeräte eingesetzt, die bis zu 80 Zeichen darstellen können (Karl P. Dürre: "Braille and advanced man-computer-interaction", S.9, Interner Bericht Nr. 24/85 der Universität Karlsruhe, Fakultät für Informatik, 1985). Verfahren zur unmittelbaren elektrischen Stimulation der Hautoberfläche wurden untersucht (Hans Brümmer: "Untersuchung von elektrotaktilen Schrift- und Bildtastverfahren für Blinde", VDI Verlag Düsseldorf, 1987). Zum Abtasten von Zeichnungen wird die Helligkeitsverteilung eines - im allgemeinen kleinen - Teils der Zeichnung durch vibrierende Stifte oder pulsierende Luftströme dargestellt, die in sechs Spalten mit je 24 Elementen angeordnet sind und mit einem Finger gefühlt werden können (James C. Craig & Carl E. Sherrick: "Dynamic tactile displays", S.209 - 214, in: William Schiff & Emerson Foulke (eds.): "Tactual perception: a sourcebook", Cambridge University Press 1982). Zur Darstellung bildlicher Information wurde ein Gerät konstruiert, das 7021 elektromagnetische Fühlzeichen enthält, die in 119 Spalten zu je 59 Elementen mit etwa 3mm Abstand angeordnet sind (K. Klöpfer: "Elektronische Post für Blinde", in: "5th International Workshop on Computerized Braille Production", Schweiz 1985). EP-A-0 291 338 beschreibt ein hydraulisches Stellelement, das mit elektroviskoser Flüssigkeit betrieben und elektrisch gesteuert wird. In GB-A-2 212 336 wird die Verwendung solcher Stellelemente zur Darstellung von Blindenschrift erwähnt. Vorgeschlagen wurde auch die Steuerung von Anzeigeelementen durch elektrisch heizbare Drähte aus einem Formgedächtnis-Metall (DE-AS 39 29 275.4).
Als Eingabegerät benutzen blinde Benutzer von Rechnersystemen meist einen ortsfesten Steuerknüppel ("Joystick").
Es existieren Anzeigetafeln für Sehende, an deren Oberfläche eine zusätzliche Anordnung von gegeneinander und nach außen isolierten Elektroden Eingaben durch Auflegen eines Fingers ermöglicht, wobei die kapazitive Kopplung zwischen den besagten Elektroden und dem Finger ausgenutzt wird.
Es sind elektroviskose Flüssigkeiten (EVF) bekannt, deren Viskosität im elektrischen Feld ansteigt (US 24 17 850, US 26 61 596 und US 30 47 507). Die Haftung der EVF an Elektroden, zwischen denen ein elektrisches Feld vorliegt, ermöglicht die Konstruktion von elektrisch steuerbaren Ventilen ohne bewegte mechanische Teile (US 35 87 613). Es wurde vorgeschlagen, die Volumenveränderung von EVF im elektrischen Feld zur Konstruktion peristaltischer Pumpen auszunutzen. Die sowjetische Patentanmeldung 24 81 802/06 beschreibt eine EVF-getriebene peristaltische Pumpe, mit der andere Flüssigkeiten gefördert werden (R.G. Gorodkin et al.: "Applications of the Electrorheological Effect in Engineering Practice", S.57-59, in: Fluid Mechanics-Soviet Research, Vol. 8, No. 4, Jul.-Aug. 1979).

Zur Darstellung bildhafter Information wäre es wünschenswert, benachbarte Anzeigeelemente in einem Abstand anzuordnen, der deutlich geringer ist als die Punktabstände herkömmlicher Blindenschrift von 2,5 - 2,8mm, um den Eindruck zusammenhängender Linien hervorrufen zu können ("Entwicklung eines großflächigen und hochauflösenden taktilen Displays", in: Zwischenbericht 1988/1989 des Modellversuchs Informatik für Blinde der Universität Karlsruhe). Da andererseits ein Vielfaches des Abstandes im Bereich 2,5 - 2,8mm liegen sollte, um Blindenschrift in üblicher Größe darstellen zu können, liegt der größte Abstand, der die obige Forderung erfüllt, im Bereich 1,25 - 1,4mm. Die Anzeigefläche sollte mindestens so groß sein, daß eine grobe Gesamtdarstellung von Bildern möglich ist und Schriftzeilen mit 40 Braillezeichen Platz finden. Die beiden vorstehenden Forderungen bedingen Geräte mit 40000 bis 80000 Fühlzeichen. Außerdem wäre es vorteilhaft, wenn der Benutzer die Anzeigefläche unmittelbar zur Eingabe benutzen könnte, weil es für Blinde aufwendig ist, einem auf dem Ausgabegerät dargestellten Positionszeiger zu folgen, der mit einem Steuerknüppel bewegt wird.

Mit elektromechanischen Anzeigeelementen sind diese Forderungen grundsätzlich erfüllbar, jedoch verhindert die Höhe der Kosten eine Realisierung. Eine kostengünstige Ansteuerung der Fühlzeichen ist nur möglich, wenn diese ihren Zustand beibehalten, bis sie einzeln oder gruppenweise adressiert und in einen neuen Zustand versetzt werden. Daher können handelsübliche speicherlose Stellglieder nicht unmittelbar verwendet werden. Außerdem müssen Elektromagnete und elektrostriktive Elemente aufgrund ihres Durchmessers in mehreren Ebenen angeordnet werden. Anzeigeelemente mit Formgedächtnismetallen lassen sich zwar in hinreichend geringem Abstand anordnen, sind jedoch feinmechanische Sonderanfertigungen und daher nicht kostengünstig herzustellen. Beim elektrotaktilen Verfahren kann ein Abstand von 3mm zwischen benachbarten Elementen nicht unterschritten werden, ohne die Lokalisierbarkeit des Reizes zu beeinträchtigen. Außerdem sind hierbei die Anzeigeelemente grundsätzlich speicherlos.

Die beschriebenen mit elektroviskoser Flüssigkeit betriebenen Anzeigeelemente behalten ihren Zustand bei geschlossenem Ventil bei. Jedoch ist ihre Herstellung aufwendig, eine Vorrichtung, die Benutzereingaben ermöglicht, ist nicht vorgesehen, und die Ausstattung mit einer derartigen Vorrichtung würde den hierfür üblichen Mehraufwand verursachen.

Den oben aufgestellten Forderungen will die Erfindung auf kostengünstige Weise genügen. Die Anzeigefläche des Gerätes wird von einer Platte aus elektrisch nichtleitendem Material gebildet, auf deren Oberseite eine Membran befestigt ist. Ober- und Unterseite der Platte sind durch Kanäle miteinander verbunden. Die Kanäle münden auf der Unterseite in einen gemeinsamen Vorratsbehälter, auf der Oberseite sind sie durch die besagte Membran flüssigkeitsdicht abgeschlossen. Der Vorratsbehälter und die Kanäle sind mit elektroviskoser Flüssigkeit gefüllt. In jedem Kanal sind Elektroden so angeordnet, daß mindestens ein elektrisch steuerbares Ventil gebildet wird. Jeder dieser Kanäle bildet zusammen mit dem ihn abschließenden Membranstück ein Anzeigeelement. Die Wölbung der Membran über dem Kanal und die Flüssigkeitsmenge, die sich unter dieser Wölbung und im Kanal befindet, repräsentieren den Zustand des Anzeigeelements. Die Funktion der Elektroden in den Kanälen kann zwei Ausprägungen haben: In der ersten Ausprägung bilden die Elektroden ein elektrisch steuerbares Ventil. Ein Anzeigeelement verändert seinen Zustand nicht, wenn die elektrische Spannung an den Elektroden des Elements so hoch ist, daß die EVF in dem Kanal durch die Druckdifferenz zwischen dem Raum unmittelbar unter der Membran und dem Vorratsbehälter nicht zum Fließen gebracht wird. Der Zustand eines Anzeigeelements wird verändert, indem der Flüssigkeitsdruck im Vorratsbehälter auf den gewünschten Wert gebracht wird und die Spannung zwischen den Elektroden des Elements hinreichend abgesenkt wird, um einen Druckausgleich zwischen den beiden Enden des Ventils zu ermöglichen. Der Flüssigkeitsdruck im Vorratsbehälter wird entweder durch Zu- oder Abpumpen von EVF variiert oder durch die Veränderung des Raumvolumens mittels einer Membran gesteuert. In der zweiten Ausprägung bilden die Elektroden eine peristaltische Pumpe. Dabei können in drei Abschnitten des Kanals unabhängig voneinander elektrische Felder erzeugt werden. Die beiden äußeren Kanalabschnitte dienen als elektrisch steuerbare Ventile, das Feld im mittleren Abschnitt steuert die Volumenänderung der dort befindlichen Flüssigkeit. Wenn die drei Felder periodisch aufgeschaltet werden, bestimmen die Phasenbeziehungen zwischen den Schaltvorgängen, ob und in welche Richtung die EVF gepumpt wird. Bei dieser zweiten Ausprägung entfällt die Notwendigkeit einer Steuerung des Flüssigkeitsdrucks im Vorratsbehälter.

Als taktile Elemente dienen entweder unmittelbar die Wölbungen der Membran oder Stifte, die von der Membran bewegt werden können. In diesem zweiten Fall ist die Membran ganz oder teilweise von einer Platte aus elektrisch nichtleitendem Material abgedeckt, die für jedes überdeckte Anzeigeelement eine Bohrung aufweist, in der einer der besagten Stifte geführt wird.

Die Elektroden der Ventile sind so mit Sammelleitungen verbunden, daß keine zwei Ventile durch dasselbe Paar von Sammelleitungen gesteuert werden. Daher kann jedes Ventil einzeln geöffnet werden, indem die ihm zugeordneten Sammelleitungen auf dasselbe elektrische Potential geschaltet werden. Dadurch kann jedes Anzeigeelement einzeln adressiert und sein Zustand verändert werden.

Wenn das Gerät an einem Rechnersystem betrieben wird, kann es vom Benutzer in die Eingabe-Betriebsart gebracht werden. Die elektronische Steuerschaltung erzeugt dann periodisch in solcher Weise Impulse nacheinander auf allen Sammelleitungen, daß die Zustände der Anzeigeelemente unverändert bleiben. Wenn eine Fingerspitze des Benutzers auf der Anzeigefläche aufliegt, werden die Impulse kapazitiv auf den Körper des Benutzers übertragen. Durch Auswertung des Signals auf dem Körper, das zum Beispiel von der zweiten Hand des Benutzers abgegriffen werden kann, wird der Ort der Fingerspitze auf der Anzeigefläche bestimmt. Die Koordinaten dieses Ortes oder ihre Änderungen werden unter Verwendung eines für Eingabegeräte üblichen Protokolls zum Rechnersystem übertragen.

Ein durch die Erfindung erreichter Vorteil besteht darin, daß die Anzeigeelemente mit geringem Aufwand herstellbar sind und beim Herstellungsprozeß in die Anzeigefläche integriert werden, so daß eine Montage der Elemente entfällt bzw. sich gegebenenfalls auf das Einsetzen und Befestigen der Stifte beschränkt, die als taktile Elemente dienen. Insbesondere können alle Herstellungsschritte auf handelsüblichen Maschinen, wie rechnergesteuerten Bohr- und Fräsmaschinen und Klebstoffdosiergeräten, ausgeführt werden. Durch die Speicherfähigkeit der Anzeigeelemente reduziert sich die Anzahl der Ausgänge der elektrischen Steuerung für N Anzeigeelemente auf etwa das Zweifache der Quadratwuzel von N. Als weiteren Vorteil bietet die Erfindung mit geringem zusätzlichen Aufwand die Möglichkeit, die Anzeigefläche zugleich als Eingabetablett zu nutzen.

Insbesondere werden hierbei die zur Steuerung der Anzeigeelemente verwendeten Elektroden und Sammelleitungen auch zur kapazitiven Kopplung genutzt.

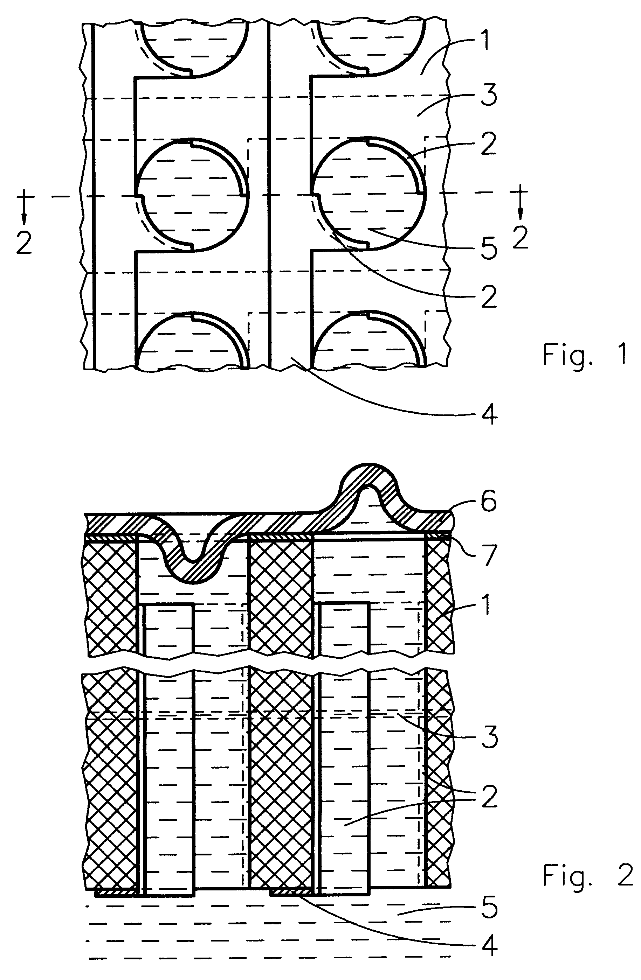

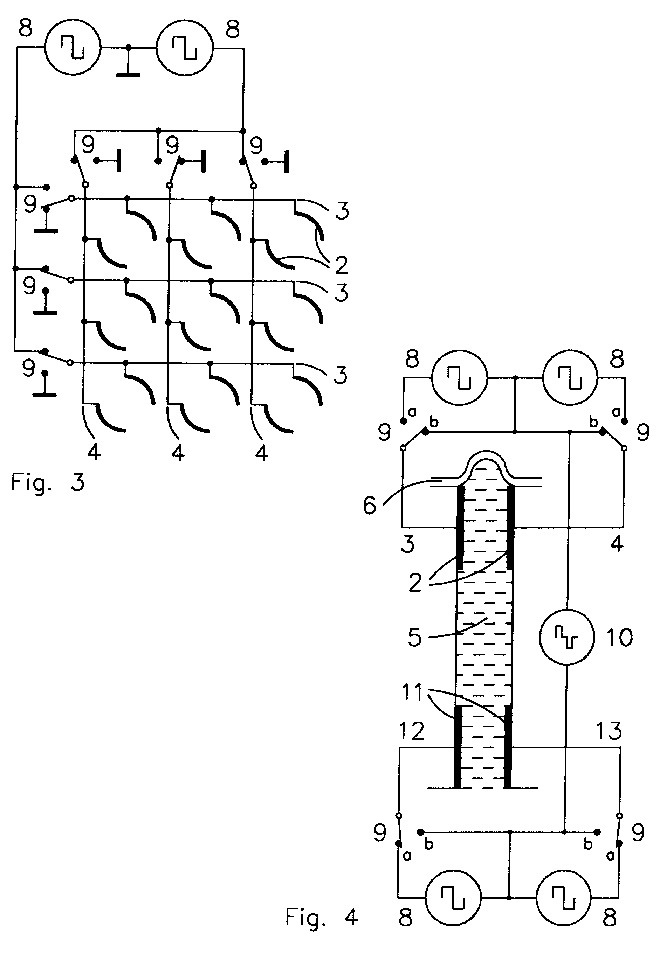

Im folgenden wird die Erfindung anhand von Zeichnungen erläutert, die lediglich einen Ausführungsweg darstellen.
Fig. 1 zeigt einen Ausschnitt einer Anzeigefläche mit integrierten Anzeigeelementen, die je ein Ventil enthalten, vom Vorratsbehälter aus gesehen.
Fig.2 zeigt einen Schnitt durch zwei der Anzeigeelemente von Fig. 1 entlang der Linie 2-2.
Fig. 3 deutet schematisch eine mögliche Ausführung der elektrischen Steuerung von neun Anzeigeelemente gemäß Fig. 1 und 2 an.
Fig. 4 zeigt schematisch eine elektrische Steuerung von Anzeigeelementen, die peristaltische Pumpen enthalten.
Runde Bohrungen in der Platte (1) aus elektrisch nichtleitendem Material enthalten je zwei Elektroden (2). Je eine Elektrode (2) jedes Anzeigeelements ist mit einer der zeilenweise verlaufenden Sammelleitungen (3) verbunden, die jeweils andere Elektrode (2) ist mit einer der spaltenweise ausgerichtenden Sammelleitungen (4) verbunden. Die Bohrungen und der Raum unter der Platte (1) sind mit elektroviskoser Flüssigkeit (5) gefüllt. Auf der Oberseite der Platte (1) ist eine Membran (6) mit einem geeigneten Klebstoff (7) befestigt. Die Membran (6) dient in diesem Beispiel unmittelbar als taktiles Element. Das Anzeigeelement links in Fig. 2 ist vollkommen zurückgesetzt, das Element rechts in Fig. 2 befindet sich in gesetztem Zustand. Die Ausstülpungen der Membran (6) sind vorgeformt, um die Druckdifferenz gering zu halten, die für das Umschalten zwischen den beiden Endzuständen nötig ist. Die hier angegebene Anordnung der Sammelleitungen (3,4) führt dazu, daß eine rechteckige Anzeigefläche, in der m · n Elemente matrixförmig angeordnet sind, eine elektrische Steuerung mit m + n Ausgängen benötigt. Die Steuerung besteht im wesentlichen aus zwei Hochspannungs-Rechteckgeneratoren (8) und je einem elektronischen Schalter (9) für jede der Sammelleitungen (3,4). In den Zeichnungen sind diese Schalter zum Zwecke der Vereinfachung als mechanische Schalter dargestellt. Die Länge der als Ventil wirksamen Bohrung ist so bemessen, daß das Ventil bei den im Normalbetrieb auftretenden Druckdifferenzen noch sicher sperrt, wenn eine der beiden Elektroden auf Massepotential geschaltet ist. In Fig. 3 ist bei der gezeigten Schalterstellung das mittlere Ventil der oberen Reihe als einziges geöffnet.

Aus Fig. 2 ist ersichtlich, daß keine der Sammelleitungen (3,4) auf der Oberseite der Platte (1) liegt und daß die Elektroden (2) nicht bis an den oberen Rand der Bohrung geführt sind. Da handelsübliche EVF einen sehr geringen Leitwert aufweist, wird durch diese Anordnung der spannungsführenden Teile verhindert, daß unzulässig hohe Ströme durch den Körper des Benutzers fließen, wenn die Membran (6) beschädigt wird.
Fig. 4 stellt ein Anzeigeelement mit den Elektroden (2) und (11) dar, die zwei Ventile bilden, zwischen denen die Spannung des Generators (10) mit einem Impuls/Pause-Verhältnis von 1:1 liegt. Die beiden Ventile werden unabhängig voneinander über die Sammelleitungen (3,4) und (12,13) gesteuert. Förderrichtung und Fördermenge der Pumpe werden durch die Phasenbeziehungen zwischen dem Signal des Generators (10) und den Schaltvorgängen der elektronischen Schalter (9) gesteuert.
Nicht dargestellt sind in den Zeichnungen die Ausführung des Vorratsbehälters, der Drucksteuerung im Vorratsbehälter, der Einzelheiten der Anzeigesteuerung und der Auswerteschaltung für das Eingabesignal, da diese Komponenten keine über den Stand der Technik hinausgehenden Besonderheiten aufweisen.

## Patentansprüche

1. Gerät zur tastbaren Darstellung von Schriftzeichen und graphischer Information für Sehbehinderte und Blinde,
dadurch gekennzeichnet, daß die hydraulisch stellbaren Anzeigelemente mit elektroviskoser Flüssigkeit betrieben werden und Kanäle in einem elektrisch nichtleitenden Material enthalten, die so mit Elektroden ausgestattet sind, daß sie elektrisch steuerbare Ventile bilden, und daß in der Eingabe-Betriebsart eine elektronische Steuerung Spannungsimpulse auf besagte Elektroden schaltet, ohne die Zustände der Anzeigeelemente zu beeinflussen, daß durch Abgriff und Auswertung dieser kapazitiv auf eine Fingerspitze des Benutzers gekoppelten Impulse der Ort dieser Fingerspitze auf der Anzeigefläche bestimmt wird und daß die Koordinaten oder die Änderung der Koordinaten dieses Ortes als Benutzereingabe an ein Datenverarbeitungssystem übermittelt werden.

2. Gerät nach Anspruch 1, dadurch gekennzeichnet, daß die besagten Kanäle so mit Elektroden ausgestattet sind, daß sie bei geeigneter elektrischer Steuerung bidirektionale peristaltische Pumpen für elektroviskose Flüssigkeiten bilden.

3. Gerät nach Anspruch 1, dadurch gekennzeichnet, daß die besagten Anzeigeelemente eine gemeinsame Membran enthalten, deren Form von besagter elektroviskoser Flüssigkeit gesteuert wird.

4. Gerät nach Anspruch 3, dadurch gekennzeichnet, daß die besagte Membran ganz oder teilweise von einer Platte abgedeckt ist, die über den Anzeigeelementen Bohrungen aufweist, in denen Stifte geführt werden, deren Stellungen durch die Verformungen der Membran gesteuert werden, und daß diese Stifte als taktile Elemente dienen, während in Bereichen, wo die Membran nicht von besagter Platte abgedeckt ist, die Membran selbst unmittelbar als taktiles Element dient.

5. Gerät nach Anspruch 1, dadurch gekennzeichnet, daß die Elektroden der Anzeigeelemente so mit Sammelleitungen verbunden sind, daß der Zustand einzelner Anzeigeelemente verändert werden kann, ohne die Zustände der anderen Anzeigelemente zu beeinflussen.

## Claims

1. A device for the tactile representation of written characters and graphic information for visually impaired and blind persons, characterised in that the hydraulically adjustable indicator elements are operated by electrorheological fluid and contain canals, made of an electrically non-conductive material, comprising electrodes set in such a way that they form electrically controllable valves, and that, in the input operational mode, an electronic control mechanism activates voltage impulses on the said electrodes without the states of the indicator elements being affected, that, by collecting and interpretation of these impulses transferred capacitively to a finger-tip of the user, the location of this finger-tip upon the indicator surface is determined and that the co-ordinates or change of co-ordinates of this location are transmitted as user input to a data processing system.

2. A device according to claim 1, characterised in that the said canals are provided with electrodes set in such a way that, with a suitable electrical control mechanism, they form bi-directional peristaltic pumps for electrorheological fluids.

3. A device according to claim 1, characterised in that the said indicator elements contain a common membrane the shape of which is controlled by the said electrorheological fluid.

4. A device according to claim 3, characterised in that the said membrane is covered wholly or partially by a plate containing, above the indicator elements, holes in which rods are actuated, their positions controlled by the flexing of the membrane, and that these rods serve as tactile elements, whereas in areas where the membrane is not covered by said plate, the membrane itself serves directly as a tactile element.

5. A device according to claim 1, characterised in that the electrodes of the indicator elements are connected with circuits lines in such a way that the position of individual indicator elements can be changed without affecting the positions of the other indicator elements.

## Revendications

1. Appareil pour représenter de manière palpable des signes d'écriture et des informations graphiques pour malvoyants et aveugles, caractérisé par le fait que les éléments indicateurs positionnables hydrauliquement fonctionnent avec du liquide électrorhéologique et contiennent des canaux en une matière électriquement non conductrice, lesquels sont équipés d'électrodes de manière à former des soupapes aptes à être commandées électriquement, et par le fait que, dans le mode de fonctionnement "entrée", une commande électronique applique des impulsions de tension auxdites électrodes sans influencer les états des éléments indicateurs, par le fait que, par prélèvement et exploitation de ces impulsions couplées capacitivement au bout d'un doigt de l'utilisateur, on détermine l'emplacement de ce bout de doigt sur la surface indicatrice, et par le fait que les coordonnées ou la variation des coordonées de cet endroit est ou sont transmise(s), en tant qu'entrée de l'utilisateur, à un système de traitement de données.

2. Appareil selon revendication 1, caractérisé par le fait que lesdits canaux sont équipés d'électrodes de manière à former, avec une commande électrique appropriée, des pompes péristaltiques bidirectionnelles pour liquides électrorhéologiques.

3. Appareil selon revendication 1, caractérisé par le fait que lesdits éléments indicateurs comportent une membrane commune dont la forme est commandée par ledit liquide électrorhéologique.

4. Appareil selon revendication 3, caractérisé par le fait que ladite membrane est totalement ou partiellement recouverte par une plaque qui présente, au-dessus des éléments indicateurs, des trous dans lesquels sont guidées des tiges dont les positions sont commandées par les déformations de la membrane, et par le fait que les tiges servent d'éléments tactiles, tandisque dans les régions où la membrane n'est pas recouverte par ladite plaque, cette membrane proprement dite sert d'élément tactile.

5. Appareil selon revendication 1, caractérisé par le fait que les électrodes des éléments indicateurs sont reliées à des lignes collectrices de manière que l'état d'éléments indicateurs individuels puisse être modifié sans influencer les états des autres éléments indicateurs.
